**Europäisches Patentamt**

**European Patent Office**

**Office européen des brevets**

(11) Veröffentlichungsnummer: **0 184 176**
**A2**

(12) **EUROPÄISCHE PATENTANMELDUNG**

(21) Anmeldenummer: **85115273.6**

(22) Anmeldetag: **02.12.85**

(51) Int. Cl.⁴: **B 62 M 7/10**
**B 62 M 9/02, B 62 K 21/18**
**B 62 K 25/16, B 62 K 25/28**

(30) Priorität: **05.12.84 DE 3444378**

(43) Veröffentlichungstag der Anmeldung:
**11.06.86 Patentblatt 86/24**

(84) Benannte Vertragsstaaten:
**AT BE CH FR GB IT LI LU NL SE**

(71) Anmelder: **Huss, Heinrich**
**Liebigstrasse 1**
**D-6054 Rodgau 6(DE)**

(72) Erfinder: **Huss, Heinrich**
**Liebigstrasse 1**
**D-6054 Rodgau 6(DE)**

(74) Vertreter: **Rost, Jürgen, Dipl.-Ing. et al,**
**Patentanwälte Dipl.-Ing. Olaf Ruschke Dipl.-Ing. Hans E.**
**Ruschke Dipl.-Ing. Jürgen Rost Dipl.-Chem. Dr. U. Rotter**
**Pienzenauerstrasse 2**
**D-8000 München 80(DE)**

(54) **Antriebs- und Lenkvorrichtung.**

(57) Es wird eine Antrieb- und Lenkvorrichtung insbesondere für ein batteriebetriebenes Dreiradfahrzeug als eine Baueinheit vorgeschlagen, wobei am vorderen Abschnitt einer die Hinterräder lagernden integrierten Metall/Kunststoff-Karosserie ein Träger mit von ihm beabstandeter, jedoch mit ihm verbundener Lenkmechanik und mit einer die Traverse eines Rahmens aufnehmenden Hülse befestigt ist. Der Rahmen trägt dabei einen Elektromotor und Getriebe umfassenden Antrieb und lagert ein mit dem Motor gekuppeltes Antriebsrad.

FIG. 1

EP 0 184 176 A2

## Antriebs- und Lenkvorrichtung

Die Erfindung betrifft allgemein ein Dreiradfahrzeug und insbesondere eine Antrieb- und Lenkvorrichtung für ein batteriebetriebenes Dreiradfahrzeug mit wenigstens einem Antriebsmotor für das Vorderrad und/oder die beiden Hinterräder.

Bisher bekannte batteriebetriebene Fahrzeuge weisen hinsichtlich ihrer Fahrleistung, Wendigkeit und Einsatzmöglichkeit erhebliche Nachteile auf, weil sie für ihren Antrieb und Lenkung erheblichen Platz und Gewicht beanspruchen und kostenaufwendig in der Fertigung sind.

Die der Erfindung zugrundeliegende Aufgabe besteht darin, für ein Elektrofahrzeug der eingangs umrissenen Art eine die Lenkmechanik, die Vorderradaufhängung und den Antrieb umfassende Vorrichtung als Baueinheit zu schaffen, so daß das Fahrzeug wirtschaftlich herzustellen ist und technisch nicht aufwendig konstruiert sowie wartungsfrei ist, weil alle Bauteile leicht zugänglich sind und bei Bedarf mit einem Minimum an Aufwand repariert und/oder ausgetauscht werden können.

Diese Aufgabe wird erfindungsgemäß dadurch gelöst, daß am vorderen Abschnitt einer die Hinterräder lagernden integrierten Metall/Kunststoff-Karosserie ein Träger mit von ihm beabstandeter jedoch mit ihm verbundener Lenkmechanik und mit einer die Traverse eines Rahmens aufnehmenden Hülse befestigt ist, und daß der Rahmen einen Elektromotor und Getriebe umfassenden Antrieb trägt und mindestens ein mit dem Motor gekuppeltes Antriebsrad drehbar lagert.

Zweckmäßige weitere Ausgestaltungen der erfindungsgemäßen Vorrichtung ergeben sich aus den Unteransprüchen.

Der wesentliche Vorteil dieser erfindungsgemäßen Ausbildung einer die Lenkmechanik, die Vorderradaufhängung und den Antrieb umfassende Anordnung besteht darin, daß ein damit ausgerüstetes Fahrzeug ein äußerst stabiles Fahrverhalten aufweist. Insgesamt ergibt sich ein außerordentlich kompaktes Antriebsaggregat mit extrem geringen Verlusten, das zudem auch durch sein Eigengewicht die Bodenhaftung des Vorderrades verbessert, zumal der Schwerpunkt des Motors im wesentlichen auf der Achse des Vorderrades liegt. Die Anordnung ist teilweise auseinandernehmbar und kommt mit sehr wenig bewegbaren Teilen aus, so daß die Lebensdauer insgesamt erhöht ist. Die Winkelstellung der Lenksäule ist je nach Type variabel fixierbar. Die gesamte Vorrichtung ist innerhalb der überhängenden Kunststoff/Metallkarosserie geschützt angeordnet.

Die Erfindung wird nachfolgend an einem Ausführungsbeispiel anhand der beigefügten Zeichnung näher erläutert.

In der Zeichnung zeigen:

Fig. 1          eine Vorderansicht der Anordnung mit der Vorderradaufhängung und einseitigem Antrieb,

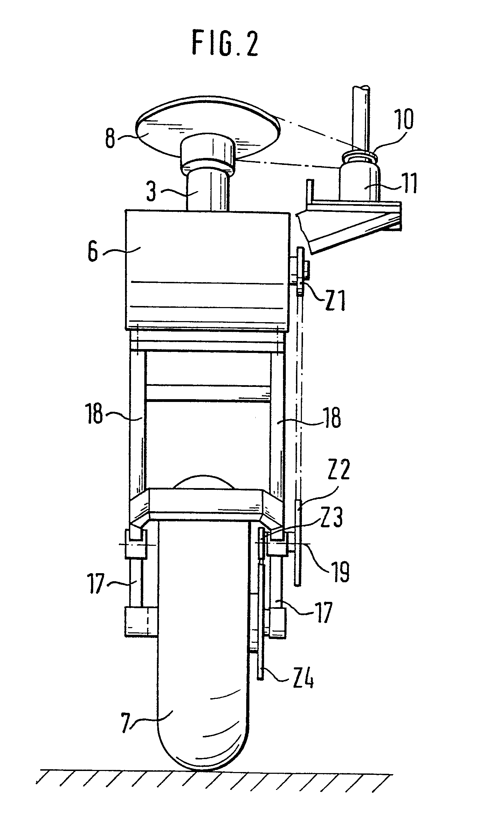

Fig. 2          eine der Anordnung nach Fig. 1 ähnliche Konstruktion mit beidseitiger Halterung,

Fig. 3          eine schematische Seitenansicht der erfindungsgemäßen Vorrichtung,

Fig. 4          eine Seitenansicht der Lenkmechanik.

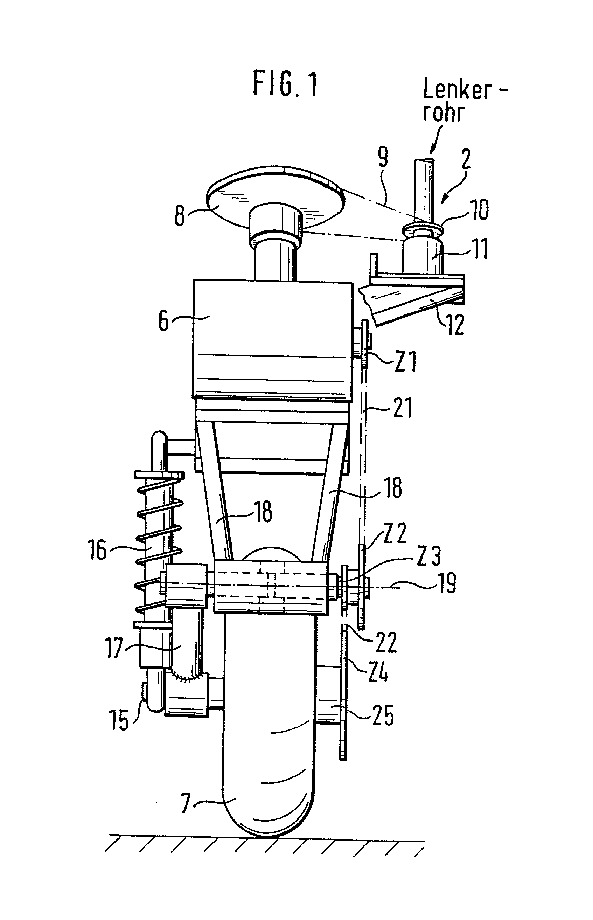

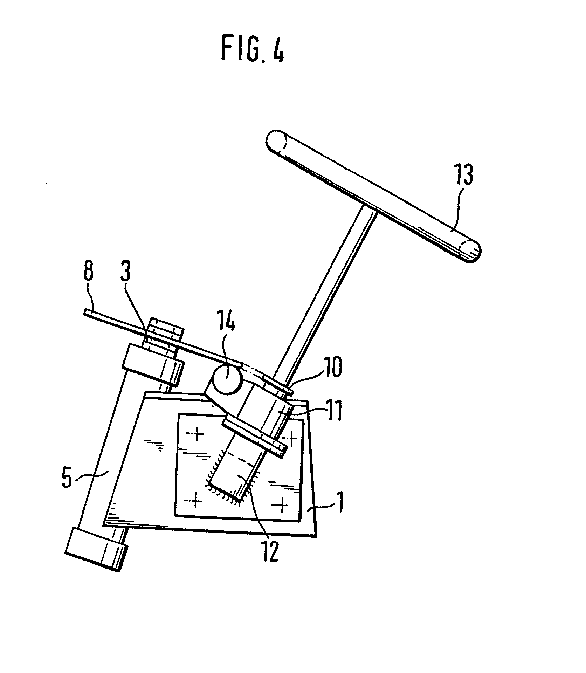

Wie in Fig. 1 und 4 gezeigt ist, umfaßt die Lenkmechanik 2 ein Kettenzahnrad 8, das mit dem Kopf eines Rahmens 4 verbunden ist. Seitlich vom Rahmen ist ein Profilteil 12 befestigt  welches die Aufnahme 11 für ein Lenkrohr eines Lenkrades 13 trägt. Auf dem Lenkrohr sitzt ein Kettenzahnrad 10, wobei eine Kurvenkette um die beiden ungleichen Zahnräder 8 und 10 geführt ist. Für wenigstens einen Kurvenkettenwinkelausgleich sorgt hierbei eine Umlenkrolle 14. Dabei ist die Anordnung so getroffen, daß ein Träger 1, an welchem das Profilteil 12 verschweißt ist, mit einer zylindrischen Hülse zur Aufnahme einer Traverse 3 versehen ist, 10.  Vorrichtung nach einem der vorhergehenden Ansprüche,
dadurch g e k e n n z e i c h n e·t , daß vor und hinter
dem Vorderrad Schutzbügel am Rahmen (4) vorgesehen sind,
die ihrerseits von der hochschlagfesten Karosserie geschützt ist.

ist, aufgrund der übersichtlichen Konstruktion sind sie leicht zugänglich, so daß hohe Reparaturkosten entfallen.

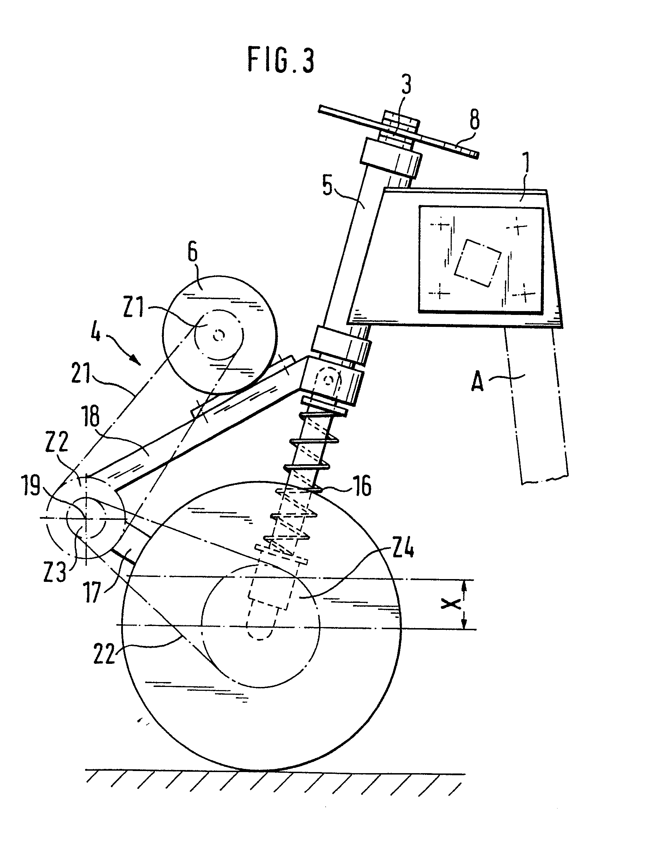

Am Rahmen 4 ist eine Trägerplatte des Elektromotors 6 mittels Schrauben und Muttern und verschiebbar gegen die obere Rahmenplatte des Rahmens 4 befestigt. Seitlich erstrecken sich vom Rahmen zwei Seitenholme in Fahrtrichtung schräg abwärts. Wenigstens ein Seitenholm 18 weist an seinem unteren freien Ende eine Aufnahme für ein Kettenzahnrad Z2 auf, welches auf einer Drehachse 19 sitzt und drehfest mit einem weiteren Kettenzahnrad Z3 verbunden ist. An dem freien Ende in der Drehachse 19 ist ein Schwingarm 17 (Fig. 3) angelenkt, welcher sich zu einem auf der Vorderradachse sitzenden Bauteil erstreckt, wobei auf der Achse weiterhin ein Federbein 16 angeordnet ist, dessen oberer Bereich am Rahmen 4 befestigt ist. Wie sich hier deutlich aus Fig. 3 ergibt, besteht somit die Möglichkeit, etwaig auftretende Schwingungen zu dämpfen und abzufedern, wobei der Federweg des Federbeines 17 in Fig. 3 mit X gekennzeichnet ist.

An der Vorderradnabe 25 des Vorderrades 7 ist ein Kettenzahnrad Z4 befestigt, welches größer als das gegenüberliegende Kettenzahnrad Z3 ist, wobei beide Kettenzahnräder von einer Antriebskette 22 umlaufen werden. Ähnlich erstreckt sich eine Antriebskette 21 um das Ritzel Z1 des Elektromotors 6 und dem zugeordneten, größeren Kettenzahnrad Z2, so daß der Antrieb vom Elektromotor 6 direkt auf das Vorderrad 7 übertragen wird. Das Übersetzungsverhältnis der Kettenzahnräder Z1, Z2, Z3 und Z4 zueinander läßt sich entsprechend dem jeweiligen Einsatzzweck, d.h. je nach gewünschtem Drehmoment und gewünschter Geschwindigkeit bestimmen.

Der Elektromotor ist auf der Platte des Rahmens 4 so angeordnet, daß er mit seiner Antriebsachse in Fahrtrichtung
gesehen im wesentlichen in der gleichen Ebene wie die Achse
der Vorderradnabe 25 liegt. Dabei läßt sich der Elektromotor mit seiner Trägerplatte einstellen, so daß hierdurch
auch die Antriebskette 21 nachgespannt werden kann.

Der im Lenkschwerpunkt angeordnete Motor treibt das Vorderrad über die beiden Ketten 21, 22 direkt an. Die in Fig. 1
gezeigte Vorderradschwinge kann vorzugsweise im Drehpunkt
Elemente zum Zwecke des Dämpfens und des Federns aufweisen.
Eine vorzügliche Dämpfung und Federung erfolgt durch das
in Fig. 3 gezeigte Federbein, wobei auch die Möglichkeit besteht, auf beiden Seiten des Vorderrades je ein Federbein
vorzusehen. Ein zusätzlicher Vorteil besteht noch darin,
daß die Dämpfung und Federung durch Änderung der Befestigungspositionen des Federbeines variabel ist. Bei der gezeigten Ausführungsform ist der Rahmen 4 mit seiner den
Motor tragenden Platte eine einheitliche Schweißkonstruktion. Das gesamte in Fig. 1 und 4 gezeigte System ist weitgehend wartungsfrei ausgebildet. Falls es indessen zu
Funktionsstörungen kommen sollte, ist eine optimale Zugän-

gigkeit im Lenk-, Vorderrad- und Antriebsbereich der
Vorrichtung gegeben. Nicht dargestellt ist die in der
Vorderradtrommel vorgesehene, über einen Seilzug betätigbare Handfeststellbremse. Die Feststellung der Handbremse erfolgt über einen am Armaturenbrett vorgesehenen
Handhebel mit Rast- und Entrasthebel einfachster Bauart.

Franzenauerstraße 4
8000 München 80
Telefon: (0 89) 98 03 24.
98 72 58. 98 88 00
Telecopy Gr. II: (0 89) 222 066
Kabel: Quadratur München
Telex: 522767 rush d

BERLIN
Kurfurstendamm 182/183
1000 Berlin 15
Telefon: (0 30) 8 83 70 78/79
Kabel: Quadratur Berlin

## RUSCHKE & PARTNER
## ANWALTSSOZIETÄT

—1—

Dipl.-Ing. Hans E. Ruschk
Dipl.-Ing. Olaf Ruschke
Dipl.-Ing. Jürgen Rost
Dipl.-Chem. Dr. Ulrich Rbl
Patentanwälte
Zugelassen beim Europäischen
Amt für Europäisches Patent
in Berlin

Rainer Schulenberg
Rechtsanwalt
Zugelassen bei den LG München
beim OLG München und dem
Bayer. Obersten Landesgericht

0184176

München, den 2. Dezember 1985

meine Akte: RH 15o85

Heinrich Huss, D 6054 Rodgau 6, Liebigstr. 1

## Ansprüche

1.    Antrieb- und Lenkvorrichtung insbesondere für ein batteriebetriebenes Dreiradfahrzeug als eine Baueinheit mit wenigstens einem Antriebsmotor für das Vorderrad und/oder die beiden Hinterräder, dadurch g e k e n n - z e i c h n e t , daß am vorderen Abschnitt (A) einer die Hinterräder lagernden integrierten Metall/Kunststoff-Karosserie ein Träger (1) mit von ihm beabstandeter jedoch mit ihm verbundener Lenkmechanik (2) und mit einer die Traverse (3) eines Rahmens (4) aufnehmenden Hülse (5) befestigt ist, und daß der Rahmen (4) einen Elektromotor (6) und Getriebe (Z1, Z2, Z3, Z4) umfassenden Antrieb trägt und mindestens ein mit dem Motor gekuppeltes Antriebsrad (7) drehbar lagert.

2. Vorrichtung nach Anspruch 1, dadurch g e k e n n -
z e i c h n e t , daß die Kraftübertragung vom Lenkrad zum Vorderrad schlupffrei und formschlüssig erfolgt.

3. Vorrichtung nach Anspruch 1, dadurch g e k e n n -
z e i c h n e t , daß die Lenkmechanik ein an dem oberen Ende der Traverse (3) festgelegtes Kettenzahnrad (8) umfaßt, das über wenigstens eine Kurvenkette (9) mit einem weiteren Kettenzahnrad (10) in Eingriff steht, welches der Drehbewegung eines in einer Aufnahme (11) eines mit der Traverse verbundenen Profilteiles (12) sitzenden Lenkrades (13) folgt.

4. Vorrichtung nach Anspruch 1 oder 2, dadurch g e -
k e n n z e i c h n e t , daß jede nachstellbare Kurven- kette (9) zwecks Winkelausgleiches über ein Umlenkelement (14) geführt ist.

5. Vorrichtung nach Anspruch 1, dadurch g e k e n n -
z e i c h n e t , daß am Rahmen (4) wenigstens ein die Vorderachse (15) drehbar lagerndes Federbein (16) vorgesehen ist, das von einem Schwingarm (17) abgestützt ist, welcher an einem Seitenholm (18) des Rahmens (4) in einer Schwenkachse (19) angelenkt ist.

6. Vorrichtung nach einem der vorhergehenden Ansprüche, - dadurch g e k e n n z e i c h n e t , daß der Antrieb des Vorderrades vom Motor durch eine formschlüssige Verbindung erfolgt.

7. Vorrichtung nach einem der Ansprüche 1 bis 6, dadurch g e k e n n z e i c h n e t , daß in der Schwenkachse (19) des Schwingarmes (17) ein mit dem Antriebsritzel (Z1) des Elektromotors (6) über einen Kettentrieb (21) gekoppeltes Zahnrad (22) und ein mit letzterem drehfest verbundenes Zahnrad (Z3) gelagert ist, welches seinerseits über einen weiteren Kettentrieb (22) mit einem auf der Vorderradnabe (25) befestigten Zahnrad (Z4) gekoppelt ist.

8. Vorrichtung nach Anspruch 1, dadurch g e k e n n - z e i c h n e t , daß die Achse des Antriebsritzels (Z1) des Elektromotors (6) in Fahrtrichtung gesehen im wesentlichen in der gleichen Ebene wie die Achse der Vorderradnabe (25) angeordnet ist.

9. Vorrichtung nach einem der vorhergehenden Ansprüche, dadurch g e k e n n z e i c h n e t , daß die Trägerplatte des Motors in Bezug auf ihren Abstand zur Vorderradnabe einstellbar angeordnet ist.

10. Vorrichtung nach einem der vorhergehenden Ansprüche, dadurch g e k e n n z e i c h n e t , daß vor und hinter dem Vorderrad Schutzbügel am Rahmen (4) vorgesehen sind, die ihrerseits von der hochschlagfesten Karosserie geschützt ist.

# FIG. 1

Lenkerrohr

0184176

## FIG.2

FIG.3

0184176

# FIG. 4